(19) Europäisches Patentamt
European Patent Office
Office européen des brevets

(11) **EP 3 754 341 B1**

(12) **FASCICULE DE BREVET EUROPEEN**

(45) Date de publication et mention de la délivrance du brevet:
**10.08.2022 Bulletin 2022/32**

(21) Numéro de dépôt: **20178434.5**

(22) Date de dépôt: **05.06.2020**

(51) Classification Internationale des Brevets (IPC):
**G01P 5/26** *(2006.01)* **G01P 21/02** *(2006.01)*
*F03D 7/02* *(2006.01)* *G01S 17/00* *(2020.01)*
*G01S 7/497* *(2006.01)*

(52) Classification Coopérative des Brevets (CPC):
**G01S 17/95; F03D 17/00; G01P 5/26;
G01P 21/025; G01S 17/58;** F03D 7/04;
F05B 2270/32; F05B 2270/8042; Y02A 90/10;
Y02E 10/72

(54) **PROCEDE DE DETERMINATION DU PROFIL VERTICAL DE LA VITESSE DU VENT EN AMONT D'UNE EOLIENNE EQUIPEE D'UN CAPTEUR DE TELEDETECTION PAR LASER**

BESTIMMUNGSVERFAHREN DES VERTIKALEN PROFILS DER AUFWÄRTS GEMESSENEN WINDGESCHWINDIGKEIT EINER WINDKRAFTANLAGE, DIE MIT EINEM LASERFERNERKENNUNGSSENSOR AUSGESTATTET IST

METHOD FOR DETERMINING THE VERTICAL PROFILE OF THE WIND SPEED UPSTREAM OF A WIND TURBINE PROVIDED WITH A LASER REMOTE DETECTION SENSOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.06.2019 FR 1906569**

(43) Date de publication de la demande:
**23.12.2020 Bulletin 2020/52**

(73) Titulaire: **IFP Energies nouvelles
92852 Rueil-Malmaison Cedex (FR)**

(72) Inventeurs:
• **NGUYEN, Hoai-Nam
  92852 Rueil-Malmaison Cedex (FR)**
• **GUILLEMIN, Fabrice
  92852 Rueil-Malmaison Cedex (FR)**

(56) Documents cités:
**WO-A1-2018/234409**

• CHO A ET AL: "Wind Estimation and Airspeed Calibration Using the UAV with a Single-Antenna GNSS Receiver and Airspeed Sensor", GNSS 2006 - PROCEEDINGS OF THE 19TH INTERNATIONAL TECHNICAL MEETING OF THE SATELLITE DIVISION OF THE INSTITUTE OF NAVIGATION (ION GNSS 2006), THE INSTITUTE OF NAVIGATION, 8551 RIXLEW LANE SUITE 360 MANASSAS, VA 20109, USA, 29 septembre 2006 (2006-09-29), pages 3050-3058, XP056009959,
• P. TOWERS ET AL: "Real-time wind field reconstruction from LiDAR measurements using a dynamic wind model and state estimation : LiDAR wind field estimation", WIND ENERGY, vol. 19, no. 1, 21 novembre 2014 (2014-11-21), pages 133-150, XP055451329, GB ISSN: 1095-4244, DOI: 10.1002/we.1824

**Description**

**Domaine technique**

La présente invention concerne le domaine des énergies renouvelables et concerne plus particulièrement la mesure de la ressource des éoliennes, le vent, dans des objectifs de prédiction du vent, de contrôle (orientation, régulation de couple et de vitesse) et/ou de diagnostic et/ou de surveillance de l'éolienne.

Une éolienne permet de transformer l'énergie cinétique du vent en énergie électrique ou mécanique. Pour la conversion du vent en énergie électrique, elle se compose des éléments suivants :

- un mât permettant de placer un rotor à une hauteur suffisante pour permettre son mouvement (nécessaire pour les éoliennes à axe horizontal) et/ou de placer ce rotor à une hauteur lui permettant d'être entraîné par un vent plus fort et régulier qu'au niveau du sol. Le mât abrite généralement une partie des composants électriques et électroniques (modulateur, commande, multiplicateur, générateur, ...) ;

- une nacelle montée au sommet du mât, abritant des composants mécaniques, pneumatiques, certains composants électriques et électroniques, nécessaires au fonctionnement de la machine. La nacelle peut tourner pour orienter la machine dans la bonne direction ;

- un rotor, fixé à la nacelle, comprenant plusieurs pales (en général trois) et le nez de l'éolienne. Le rotor est entraîné par l'énergie du vent, il est relié par un arbre mécanique directement ou indirectement (via un système de boîte de vitesse et d'arbre mécanique) à une machine électrique (générateur électrique...) qui convertit l'énergie recueillie en énergie électrique. Le rotor est potentiellement doté de systèmes de contrôle tels qu'un système de contrôle des pales à angle variable ou un système de contrôle des freins aérodynamiques ;

- une transmission, composée de deux axes (arbre mécanique du rotor et arbre mécanique de la machine électrique) reliés par une transmission (boite de vitesse).

Depuis le début des années 1990, l'énergie éolienne a connu un regain d'intérêt, en particulier dans l'Union Européenne où le taux de croissance annuel est d'environ 20 %. Cette croissance est attribuée à la possibilité inhérente de production d'électricité sans émissions de carbone. Afin de soutenir cette croissance, le rendement des éoliennes doit continuer à être amélioré. La perspective d'augmentation de production d'énergie éolienne nécessite le développement d'outils de production efficaces, et d'outils de contrôle avancé pour améliorer les performances des machines. Les éoliennes sont conçues pour produire de l'électricité à un prix aussi bas que possible. Par conséquent, les éoliennes sont en général construites de manière à atteindre leur performance maximale pour une vitesse du vent d'environ 15 m/s. Il n'est pas nécessaire de concevoir des éoliennes qui maximisent leur rendement à des vitesses de vent plus élevées, celles-ci étant peu fréquentes. En cas de vitesses de vent supérieures à 15 m/s, il est nécessaire de perdre une partie de l'énergie supplémentaire contenue dans le vent afin d'éviter tout endommagement de l'éolienne. Toutes les éoliennes sont donc conçues avec un système de régulation de la puissance.

Pour cette régulation de la puissance, des contrôleurs sont conçus pour des aérogénérateurs à vitesse variable. Les objectifs des contrôleurs sont de maximiser la puissance électrique récupérée, de minimiser les fluctuations de vitesse du rotor et de minimiser la fatigue et les moments extrêmes de la structure (pales, mât et plate-forme).

**Technique antérieure**

Pour optimiser le contrôle, il est important de connaître la vitesse du vent au niveau du rotor de l'éolienne. Pour cela, différentes techniques ont été mises au point.

Selon une première technique, l'utilisation d'un anémomètre permet d'estimer une vitesse du vent en un point, mais cette technologie imprécise ne permet pas de mesurer l'ensemble d'un champ de vent ou de connaître les composantes tridimensionnelles de la vitesse du vent ou de connaître le profil vertical de la vitesse de vent.

Selon une deuxième technique, on peut utiliser un capteur LIDAR (acronyme de l'expression en langue anglaise « light détection and ranging » pouvant être traduite par télédétection par Laser). Le LIDAR est une technologie de télédétection ou de mesure optique basée sur l'analyse des propriétés d'un faisceau renvoyé vers son émetteur. Cette méthode est utilisée notamment pour déterminer la distance à un objet au moyen d'un laser à impulsions. À la différence du radar basé sur un principe similaire, le capteur LIDAR utilise de la lumière visible ou infrarouge au lieu d'ondes radio. La distance à un objet ou à une surface est donnée par la mesure du délai entre l'impulsion et la détection du signal réfléchi.

Dans le domaine des éoliennes, le capteur LIDAR est annoncé comme étant un capteur indispensable au bon fonctionnement des grandes éoliennes, tout particulièrement alors que leur taille et leur puissance augmentent (aujourd'hui, 5 MW, bientôt 12 MW en offshore). Ce capteur permet la mesure à distance du vent, permettant dans un premier temps de calibrer les éoliennes pour qu'elle puissent fournir une puissance maximum (optimisation de la courbe de puissance). Pour cette étape de calibration, le capteur peut être positionné au sol et orienté verticalement (profiler), ce qui permet de mesurer la vitesse de vent et sa direction, ainsi que le gradient de vent selon les altitudes. Cette application est tout particulièrement critique puisqu'elle permet de connaitre la ressource productrice d'énergie. Ceci est important pour les projets éoliens, puisque cela conditionne la fiabilité financière du projet. Toutefois, cette méthode peut paraître onéreuse, car elle nécessite un capteur LIDAR placé fixement sur le sol ou la mer et orienté verticalement, en plus du capteur LIDAR placé sur l'éolienne pour l'application décrite ci-dessous.

Une seconde application est le placement de ce capteur sur la nacelle de l'éolienne, pour mesurer le champ de vent en avant de l'éolienne en étant orienté quasiment horizontalement. A priori, la mesure du champ de vent à l'avant de l'éolienne permet de connaitre à l'avance la turbulence que va rencontrer l'éolienne quelques instants plus tard. Toutefois, les techniques actuelles de contrôle et de surveillance d'une éolienne ne permettent pas de prendre en compte une mesure réalisée par un capteur LIDAR en estimant précisément la vitesse du vent au niveau du rotor, c'est-à-dire dans le plan du rotor. Une telle application est décrite notamment dans la demande de brevet FR 3013777 (US 2015145253).

La vitesse du vent varie en fonction de l'altitude : le vent est plus important à une altitude élevée qu'au niveau du sol. La connaissance du profil vertical de la vitesse du vent, en d'autres termes du gradient de la vitesse du vent en fonction de l'altitude, est utile dans différentes applications de commande d'éolienne. Le document Wagner, Rozenn & Antoniou, Ioannis & M. Pedersen, Søren & Courtney, Michael & Jørgensen, Hans. (2009). The Influence of the Wind Speed Profile on Wind Turbine Performance Measurements. Wind Energy. 12. 348 - 362. 10.1002/we.297. décrit notamment la relation entre le profil du vitesse du vent et les performances de l'éolienne. Selon des exemples, ce profil vertical de la vitesse du vent peut être utilisé dans les évaluations de l'énergie de l'éolienne ou dans le contrôle de l'angle de pitch (l'angle d'orientation) des pales de l'éolienne.

Classiquement, le profil vertical de la vitesse du vent utilisé par les fabricants de capteur LIDAR est obtenu par des méthodes appliquées hors ligne basées sur l'approche du traitement par lots. Par conséquent, ces méthodes ne sont pas adaptées pour estimer le profil vertical de la vitesse du vent en temps réel.

De plus, d'autres méthodes pour déterminer le profil vertical de la vitesse du vent utilisent des représentations mathématiques de celle-ci parmi lesquelles : le profil logarithmique ou la loi de puissance.

Le profil logarithmique de vent a été créé à partir d'un modèle de la couche limite turbulente sur une plaque plate par Prandtl. Il a ensuite été trouvé qu'il était valide sous une forme non modifiée par vent fort dans la couche limite atmosphérique près de la surface du sol ou de la mer. En surface, le profil logarithmique du vent est alors donné par

$$v_z = \frac{v_*}{\kappa} \ln \frac{z}{z_0} - \psi_m$$

Où vz est la vitesse longitudinale du vent à l'altitude z, v* est la vitesse de frottement, k=0.41 est la constante de Von Karman, z0 est la rugosité de la surface, $\psi$m la correction diabatique du profil vertical de la vitesse du vent. Ce profil logarithmique dépend uniquement de constantes et est peu précis à haute altitude et est difficile à calibrer. De plus, ce profil logarithmique est moins précise que la loi de puissance.

Quant à elle, la loi de la puissance s'écrit :

$$\frac{v_z}{v_{z_0}} = \left( \frac{z}{z_0} \right)^{\alpha}$$

Avec $v_z$ la vitesse longitudinale du vent à l'altitude z, $z_0$ altitude de référence, $v_{z_0}$ la vitesse longitudinale du vent à l'altitude de référence $z_0$ et $\alpha$ l'exposant de ladite loi de puissance.

Cette loi de puissance est généralement utilisée dans les évaluations de l'énergie éolienne, où la vitesse du vent à la hauteur d'une éolienne doit être estimée à partir d'observations de vent près de la surface, ou lorsque les données de vitesse du vent à différentes hauteurs doivent être ajustées à une hauteur standard. Par rapport à la loi logarithmique, la loi de puissance peut facilement être intégrée sur une hauteur: Ce profil est largement utilisé à des fins d'ingénierie en raison de sa simplicité. En supposant des conditions atmosphériques neutres, il est bien connu que la loi de puissance produit des prévisions plus précises de la vitesse du vent que la loi logarithmique, de 100m à proximité de la partie supérieure de la couche limite atmosphérique. Pour des conditions de vent normales sur des sites offshore (en mer), l'exposant $\alpha$ est fixé à 1/7. Cependant, lorsqu'un exposant constant est utilisé, il ne prend pas en compte la variation en fonction du temps et la rugosité de la surface. De plus, il ne prend pas en compte le déplacement des vents de la surface dû à la présence d'obstacles, qui est l'éolienne dans notre cas. Par conséquent, l'utilisation d'un exposant constant peut donner des estimations du profil vertical de la vitesse du vent assez erronées.

**Résumé de l'invention**

La présente invention a pour but notamment de déterminer, en temps réel, un profil vertical précis de la vitesse du vent de manière simple. Dans ce but, l'invention concerne un procédé de détermination du profil vertical de la vitesse du vent en amont d'une éolienne, pour lequel, on réalise des mesures de vitesse du vent au moyen d'un capteur LIDAR, puis on détermine l'exposant $\alpha$ de la loi de puissance au moyen d'un filtre de Kalman sans parfum et des mesures, puis on applique cet exposant $\alpha$ à la loi de puissance pour déterminer le profil vertical de la vitesse du vent.

L'invention concerne un procédé de détermination du profil vertical de la vitesse du vent en amont d'une éolienne, ladite éolienne étant équipée d'un capteur LIDAR dirigé en amont de ladite éolienne, dans lequel on met en œuvre les étapes suivantes :

a) On mesure la vitesse du vent en au moins un plan de mesure en amont de ladite éolienne en au moins deux points de mesure situés à des altitudes différents au moyen dudit capteur LIDAR ;
b) On construit un modèle de profil vertical de la vitesse de vent au moyen d'une loi de puissance de la forme

$$\frac{v_z}{v_{z_0}} = \left(\frac{z}{z_0}\right)^{\alpha}$$

Avec $v_z$ la vitesse longitudinale du vent à l'altitude z, $z_0$ altitude de référence, $v_{z_0}$ la vitesse longitudinale du vent à l'altitude de référence $z_0$ et $\alpha$ l'exposant de ladite loi de puissance ;
c) On détermine ledit exposant $\alpha$ de ladite loi de puissance au moyen d'un filtre de Kalman sans parfum au moyen desdites mesures de la vitesse de vent auxdits deux points de mesure ; et
d) On détermine ledit profil vertical de la vitesse du vent en appliquant ledit exposant $\alpha$ déterminé audit modèle de profil vertical de la vitesse de vent.

Selon un mode de réalisation de l'invention, on applique ledit filtre de Kalman sans parfum à un modèle d'état qui comporte du bruit additif et du bruit multiplicatif.

Avantageusement, ledit modèle d'état s'écrit :

$$\begin{cases} x(k) &= x(k-1) + \eta(k-1), \\ y(k) &= (v_2(k) + \epsilon_2(k))\left(\frac{z_1}{z_2}\right)^{x(k)} - \epsilon_1(k) \end{cases}$$

Avec x(k)=a(k) la variable d'état à l'instant k, y(k)=v1(k) la sortie dudit modèle d'état correspondant à la vitesse longitudinale du vent mesurée à l'instant k au point de mesure 1, $\eta$(k-1) est la variation de l'exposant $\alpha$ à l'instant k-1, v2(k) la vitesse longitudinale du vent mesurée à l'instant k au point de mesure 2, z1 l'altitude du point de mesure 1, z2 l'altitude du point de mesure 2, $\epsilon$1(k) le bruit de la vitesse v1 à l'instant k, et $\epsilon$2(k) le bruit de la vitesse v2 à l'instant k.

De préférence, pour l'application dudit filtre de Kalman, on considère la variable aléatoire augmentée $x_a$

$$x_a(k) = \begin{bmatrix} x(k) \\ \epsilon_2(k) \end{bmatrix}$$

Avec x(k)=a(k) la variable d'état à l'instant k et $\epsilon$2(k) le bruit de la vitesse v2 à l'instant k. Selon un aspect, on détermine ledit exposant $\alpha$ de ladite loi de puissance au moyen des étapes suivantes :

i) on initialise k=0, le vecteur d'état $\hat{x}_a(0|0)$ = m(0) et l'état de la matrice de covariance, $P(0|0)$ = $P_0$ ;
ii) à chaque instant k, on acquiert lesdites mesures v1(k) et v2(k) de la vitesse de vent aux points de mesures 1 et 2, avec y(k)=v1(k) ; et
iii) à chaque instant k, on détermine ledit exposant $\alpha$ de ladite loi de puissance au moyen des équations suivantes :

$$\begin{cases} K(k) = P_{xy}P_{yy}^{-1} \\ x(k|k) = x(k|k-1) + K(k)(v_1(k) - m_y) \\ P(k|k) = P(k|k-1) - K(k)P_{yy}K(k)^T \end{cases}$$

Avec K le gain du filtre de Kalman, Pxy la covariance croisée de l'état et de la mesure, Pyy la covariance prédite de la mesure, my la moyenne prédite de la sortie, v1(k) la vitesse longitudinale du vent mesurée à l'instant k au point de mesure 1.

De plus, l'invention concerne un procédé de contrôle d'une éolienne équipée d'un capteur LIDAR, dans lequel on met en œuvre les étapes suivantes :

a) on détermine ledit profil vertical de la vitesse du vent en amont de l'éolienne au moyen du procédé selon l'une des caractéristiques précédentes ;
b) on contrôle ladite éolienne en fonction dudit profil vertical de la vitesse du vent en amont de ladite éolienne.

L'invention concerne également un produit programme d'ordinateur qui comprend des instructions de code agencés pour mettre en œuvre les étapes d'un procédé selon l'une des caractéristiques précédentes, lorsque le programme est exécuté sur une unité de traitement dudit capteur LIDAR.

En outre, l'invention concerne un capteur LIDAR pour éolienne. Il comprend une unité de traitement mettant en œuvre un procédé selon l'une des caractéristiques précédentes.

De plus, l'invention concerne une éolienne qui comporte un capteur LIDAR selon l'une des caractéristiques précédentes, ledit capteur LIDAR étant de préférence placé sur la nacelle de ladite éolienne ou dans le nez de l'éolienne.

D'autres caractéristiques et avantages du procédé selon l'invention, apparaîtront à la lecture de la description ci-après d'exemples non limitatifs de réalisations, en se référant aux figures annexées et décrites ci-après.

**Liste des figures**

La figure 1 illustre une éolienne équipée d'un capteur LIDAR selon un mode de réalisation de l'invention.

La figure 2 illustre les étapes du procédé de détermination du profil vertical de la vitesse du vent selon un mode de réalisation de l'invention.

La figure 3 illustre les étapes du procédé de contrôle d'une éolienne selon un deuxième mode de réalisation de l'invention.

La figure 4 est une courbe de la vitesse radiale du vent mesurée à deux altitudes, à 200m en amont de l'éolienne, en fonction du temps, pour un exemple.

La figure 5 est une courbe de la vitesse longitudinale estimée à deux altitudes, à 200m en amont de l'éolienne, en fonction du temps, pour l'exemple de la figure 4.

La figure 6 est un exemple de courbe de la variation de l'exposant $\alpha$ en fonction du temps pour l'exemple de la figure 4.

La figure 7 est une courbe de la vitesse longitudinale estimée au moyen du procédé selon un mode de réalisation l'invention (à partir des mesures de l'exemple de la figure 4) et mesurée, à 100m en amont de l'éolienne, en fonction du temps.

**Description des modes de réalisation**

La présente invention concerne un procédé de détermination du profil vertical de la vitesse du vent en amont d'une éolienne (la notion « d'amont » est définie selon la direction du vent vers l'éolienne). On appelle profil vertical de la vitesse du vent le gradient de la vitesse du vent en fonction de l'altitude. Le profil vertical de la vitesse du vent déterminé permet de déterminer la variation verticale du vent en amont de l'éolienne et au niveau du plan du rotor de l'éolienne. Selon l'invention, l'éolienne est équipée d'un capteur LIDAR qui est disposé sensiblement horizontalement pour mesurer la vitesse du vent en amont de l'éolienne.

Selon l'invention, le capteur LIDAR permet de mesurer la vitesse du vent sur au moins un plan de mesure en amont de l'éolienne. Il existe plusieurs types de capteur LIDAR, par exemple les capteurs LIDAR scannés, LIDAR continus ou LIDAR pulsés. Dans le cadre de l'invention, on utilise de préférence un LIDAR pulsé. Cependant, les autres technologies de LIDAR peuvent être utilisées tout en restant dans le cadre de l'invention.

Le capteur LIDAR permet une mesure rapide. Par conséquent, l'utilisation d'un tel capteur, permet une détermination rapide en continu et en temps réel du profil vertical de la vitesse du vent. Par exemple, le taux d'échantillonnage du capteur LIDAR peut être compris entre 1 et 5Hz (voire plus dans le futur), et peut valoir 4 Hz. De plus, le capteur LIDAR permet d'obtenir des informations relatives au vent en amont de l'éolienne, ces informations sont liées au vent qui va arriver sur l'éolienne. Par conséquent, le capteur LIDAR peut être utilisé pour la détermination du profil vertical de la vitesse du vent.

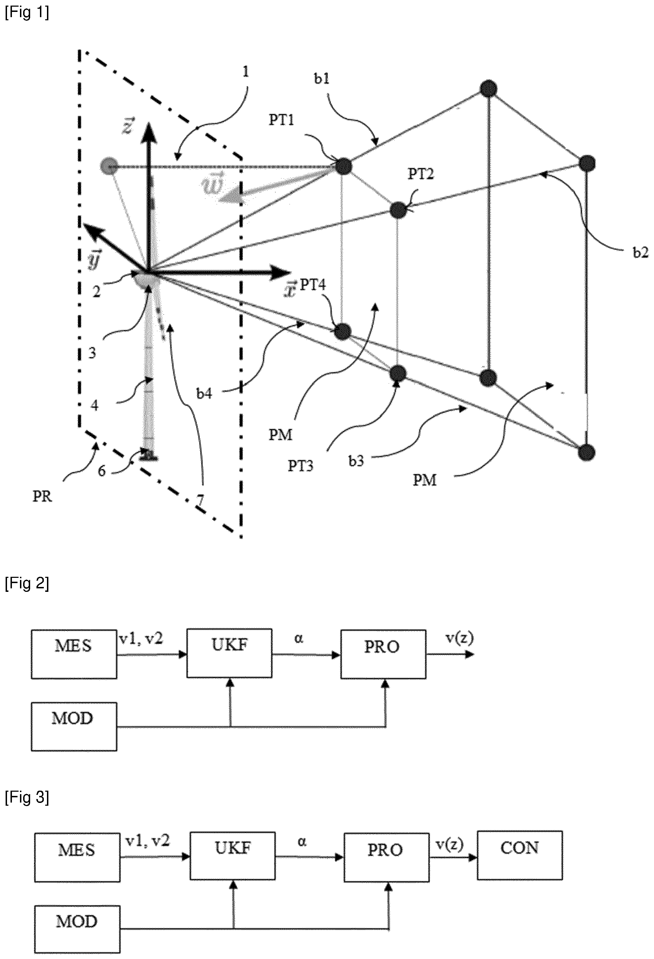

La figure 1 représente, de manière schématique et non limitative, une éolienne 1 à axe horizontal équipée d'un capteur LIDAR 2 pour le procédé selon un mode de réalisation de l'invention. Le capteur LIDAR 2 est utilisé pour mesurer la vitesse du vent à une distance donnée sur une pluralité de plans de mesure PM (seulement deux plans de mesure sont représentés). La connaissance en avance de la mesure de vent permet a priori de donner beaucoup d'informations. Sur cette figure, sont représentés également les axes x, y et z. Le point de référence de ce repère est le centre du rotor. La direction x est la direction longitudinale, correspondant à la direction de l'axe du rotor, en amont de l'éolienne, cette direction correspond aussi à la direction de mesure du capteur LIDAR 2. La direction y, perpendiculaire à la direction x, est la direction latérale située dans un plan horizontal (les directions x, y forment un plan horizontal). La direction z est la direction verticale (correspondant sensiblement à la direction du mât 4) dirigée vers le haut, l'axe z est perpendiculaire aux axes x et y. La plan du rotor est indiqué par le rectangle en traits pointillés PR, il est défini par les directions y, z pour une valeur de x nul. Les plans de mesure PM sont des plans formés par les directions y, z à une distance du plan du rotor PR (pour une valeur de x non nulle). Les plans de mesure PM sont parallèles au plan du rotor PR.

Classiquement, une éolienne 1 permet de transformer l'énergie cinétique du vent en énergie électrique ou mécanique. Pour la conversion du vent en énergie électrique, elle se compose des éléments suivants :

- un mât 4 permettant de placer un rotor (non représenté) à une hauteur suffisante pour permettre son mouvement (nécessaire pour les éoliennes à axe horizontal) et/ou de placer ce rotor à une hauteur lui permettant d'être entraîné par un vent plus fort et régulier qu'au niveau du sol 6. Le mât 4 abrite généralement une partie des composants électriques et électroniques (modulateur, commande, multiplicateur, générateur, ...) ;
- une nacelle 3 montée au sommet du mât 4, abritant des composants mécaniques, pneumatiques, certains composants électriques et électroniques (non représentés), nécessaires au fonctionnement de la machine. La nacelle 3 peut tourner pour orienter la machine dans la bonne direction ;
- le rotor, fixé à la nacelle, comprenant plusieurs pales 7 (en général trois) et le nez de l'éolienne. Le rotor est entraîné par l'énergie du vent, il est relié par un arbre mécanique directement ou indirectement (via un système de boîte de vitesse et d'arbre mécanique) à une machine électrique (générateur électrique...) (non représentés) qui convertit l'énergie recueillie en énergie électrique. Le rotor est potentiellement doté de systèmes de contrôle tels que un système de contrôle des pales à angle variable ou un système de contrôle des freins aérodynamiques ;
- une transmission, composée de deux axes (arbre mécanique du rotor et arbre mécanique de la machine électrique) reliés par une transmission (boite de vitesse) (non représentés).

Comme visible à la figure 1, qui est un exemple de réalisation d'un capteur LIDAR pulsé, le capteur LIDAR 2 utilisé comporte quatre faisceaux ou axes de mesures (b1, b2, b3, b4). De manière non limitative, le procédé selon l'invention fonctionne également avec un capteur LIDAR comportant un nombre quelconque de faisceaux. Le capteur LIDAR réalise une mesure ponctuelle en chaque point de mesure (PT1, PT2, PT3, PT4) qui sont des points d'intersection d'un plan de mesure PM et d'un faisceau (b1, b2, b3, b4). Ces points de mesure (PT1, PT2, PT3, PT4) sont représentés par des cercles noirs sur la figure 1. Le traitement des mesures en ces points de mesure (PT1, PT2, PT3, PT4) permet de déterminer la vitesse du vent dans les plans de mesure PM et à plusieurs altitudes : les points de mesure PT1 et PT2 sont à une altitude supérieure à l'altitude des points de mesure PT3 et PT4. Pour cela, on peut appliquer notamment le procédé de modélisation du vent décrit dans la demande de brevet français FR 3068139 (WO2018/234409).

De préférence, le capteur LIDAR 2 peut être monté sur la nacelle 3 de l'éolienne 1 ou dans le nez de l'éolienne 1.

Selon l'invention, le procédé de détermination du profil vertical de la vitesse du vent en amont de l'éolienne comporte les étapes suivantes :

1) Mesure du vent
2) Construction d'un modèle de profil vertical de la vitesse du vent
3) Détermination de l'exposant $\alpha$
4) Détermination du profil vertical de la vitesse du vent

Ces étapes sont réalisées en temps réel. L'étape de construction du modèle de profil vertical de la vitesse du vent peut être réalisée préalablement et hors ligne.

La figure 2 illustre, schématiquement et de manière non limitative, les étapes du procédé de détermination du profil vertical de la vitesse du vent selon un mode de réalisation de l'invention. La première étape est une étape de mesure (MES) de la vitesse du vent v1, v2 en au moins un plan de mesure à deux altitudes différentes au moyen du capteur LIDAR. On construit un modèle de profil vertical de la vitesse du vent (MOD). L'étape suivante consiste à déterminer l'exposant $\alpha$ du modèle de profil vertical de la vitesse du vent (MOD) au moyen d'un filtre de Kalman sans parfum (UKF) et des mesures de la vitesse du vent v1, v2. L'exposant $\alpha$ déterminé est utilisé avec le modèle du profil vertical de la vitesse du vent (MOD) pour déterminer (PRO) le profil vertical de la vitesse du vent v(z).

1) Mesure de la vitesse du vent

Lors de cette étape, on mesure, en continu, la vitesse du vent en au moins un plan de mesure distant de l'éolienne au moyen du capteur LIDAR, en au moins deux points de mesure ayant des altitudes différentes. Ainsi, la vitesse de vent peut être connue en amont de l'éolienne en au moins un plan de mesure à deux altitudes différentes. L'altitude des points de mesure est considérée selon l'axe vertical (axe z de la figure 1) par rapport au niveau du sol ou du niveau de la mer. Pour cette étape, on peut, par exemple, mesurer la vitesse du vent au point de mesure PT1 (point « haut ») et PT3 (point « bas) de la figure 1.

Conformément à une mise en œuvre de réalisation de l'invention, les plans de mesure peuvent être éloignés d'une distance longitudinale (selon l'axe x de la figure 1) comprise préférentiellement entre 50 et 400 m du plan du rotor. Ainsi, il est possible de déterminer l'évolution de la vitesse du vent sur une longue distance en amont de l'éolienne, ce qui permet également d'augmenter la précision de la détermination du profil vertical de la vitesse du vent.

Alternativement, les plans de mesure peuvent être plus proches ou plus éloignés que l'intervalle préféré.

Selon un exemple de réalisation non limitatif, le capteur LIDAR peut réaliser des mesures pour dix plans de mesure, notamment ils peuvent être situés respectivement à des distances de 50, 70, 90, 100, 110, 120, 140, 160, 180 et 200 m du plan du rotor.

Selon un mode de réalisation de l'invention, on peut réaliser des mesures de la vitesse du vent en plusieurs points de mesure à chaque altitude. Par exemple, on peut mesurer la vitesse du vent aux deux points de mesure PT1, PT2 (points « haut »), et aux deux points de mesure PT3, PT4 (points « bas »). Dans ce cas, la vitesse du vent mesurée à une altitude peut être une combinaison (par exemple la moyenne) des mesures de vitesse de vent à la même altitude.

Afin d'augmenter la précision des étapes suivantes, on peut mesurer la vitesse du vent dans plusieurs plans de mesure.

Conformément à une mise en œuvre de l'invention, le capteur LIDAR peut permettre de mesurer la vitesse radiale (dans l'axe du faisceau de mesure du capteur LIDAR). Dans ce cas, le procédé peut comporter une étape de détermination de la vitesse longitudinale (selon l'axe x de la figure 1) à partir de la vitesse radiale, par toute méthode connue, notamment par projection de la vitesse radiale sur l'axe longitudinal, ou par une méthode de reconstruction du vent, par exemple celle décrite dans la demande de brevet FR 3068139 (WO2018/234409).

2) Construction du modèle de vitesse du vent

Lors de cette étape, on construit un modèle de profil vertical de la vitesse de vent au moyen d'une loi de puissance de la forme (ou toute loi équivalente) :

$$\frac{v_z}{v_{z_0}} = \left(\frac{z}{z_0}\right)^{\alpha}$$

Avec $v_z$ la vitesse longitudinale du vent à l'altitude z, $z_o$ altitude de référence, $v_{z0}$ la vitesse longitudinale du vent à l'altitude de référence $z_0$ et $\alpha$ l'exposant de ladite loi de puissance.

Le procédé selon l'invention permet de déterminer les variations dans le temps de l'exposant $\alpha$ afin de rendre le modèle de vitesse du vent précis. Un des avantages de la loi de puissance est sa simplicité. De plus, la loi de puissance produit des prévisions plus précises de la vitesse du vent que la loi logarithmique, en particulier à des altitudes allant de 100m à proximité de la partie supérieure de la couche limite atmosphérique.

### 3) Détermination de l'exposant $\alpha$

Lors de cette étape, on détermine l'exposant $\alpha$ de la loi de puissance au moyen d'un filtre de Kalman sans parfum (UKF de l'anglais « unscented Kalman filter ») et au moyen des mesures de la vitesse du vent aux points de mesure. Le filtre de Kalman sans parfum est un algorithme de filtrage qui utilise un modèle de système pour estimer l'état caché actuel d'un système, puis corrige l'estimation à l'aide des mesures de capteur disponibles. La philosophie de l'UKF diffère du filtre de Kalman étendu en ce sens qu'elle utilise la transformation sans parfum pour approcher directement la moyenne et la covariance de la distribution cible. Le filtre de Kalman sans parfum peut comporter les étapes de prédiction d'état et de correction des mesures, ces deux étapes étant précédées d'une étape préalable pour le calcul des « points sigma ». Les points sigma sont un ensemble d'échantillons calculés de manière à pouvoir propager de manière exacte les informations de moyenne et de variance dans l'espace d'une fonction non linéaire.

Ainsi, un tel filtre est bien adapté pour déterminer rapidement l'exposant $\alpha$ de la loi de puissance.

Selon un mode de réalisation de l'invention, on peut appliquer le filtre de Kalman sans parfum à un modèle d'état qui comporte du bruit additif et du bruit multiplicatif. Les bruits additif et multiplicatif proviennent des mesures de la vitesse du vent à plusieurs altitudes. Le bruit est dit additif car il apparait comme un terme ajouté dans le modèle d'état. Le bruit est dit multiplicatif, car il apparaît comme un terme multipliant l'entrée du modèle d'état. Ce mode de réalisation permet de déterminer de manière précise l'exposant $\alpha$ de la loi de puissance.

De manière avantageuse, le modèle d'état peut s'écrire :

$$\begin{cases} x(k) & = x(k-1) + \eta(k-1), \\ y(k) & = (v_2(k) + \epsilon_2(k)) \left(\frac{z_1}{z_2}\right)^{x(k)} - \epsilon_1(k) \end{cases}$$

Avec $x(k)=a(k)$ la variable d'état à l'instant $k$, $y(k)=v1(k)$ la sortie du modèle d'état correspondant à la vitesse longitudinale du vent mesurée à l'instant $k$ au point de mesure 1, $\eta(k-1)$ est la variation de l'exposant $\alpha$ à l'instant $k-1$, $v2(k)$ la vitesse longitudinale du vent mesurée à l'instant $k$ au point de mesure 2, $z1$ l'altitude du point de mesure 1, $z2$ l'altitude du point de mesure 2, $\epsilon1(k)$ le bruit de la vitesse $v1$ à l'instant $k$, et $\epsilon2(k)$ le bruit de la vitesse $v2$ à l'instant $k$. Pour ce modèle d'état, $\epsilon1(k)$ est le bruit additif, et $\epsilon2(k)$ est le bruit multiplicatif.

Afin de déterminer l'exposant $\alpha$ au moyen du filtre de Kalman sans parfum, on peut considérer la variable aléatoire augmentée $x_a$

$$x_a(k) = \begin{bmatrix} x(k) \\ \epsilon_2(k) \end{bmatrix}$$

Avec $x(k)=a(k)$ la variable d'état à l'instant $k$ et $\epsilon2(k)$ le bruit de la vitesse $v2$ à l'instant $k$.

Conformément à une mise en œuvre de l'invention, on peut déterminer l'exposant $\alpha$ de la loi de puissance au moyen des étapes suivantes :

i) on initialise $k=0$, le vecteur d'état $\hat{x}_a(0|0)=m(0)$ et l'état de la matrice de covariance, $P(0|0) = P_0$ ;
ii) à chaque instant $k$, on acquiert lesdites mesures $v1(k)$ et $v2(k)$ de la vitesse de vent aux points de mesures 1 et 2, avec $y(k)=v1(k)$ ; et
iii) à chaque instant $k$, on détermine ledit exposant $\alpha$ de ladite loi de puissance au moyen des équations suivantes :

$$\begin{cases} K(k) = P_{xy}P_{yy}^{-1} \\ x(k|k) = x(k|k-1) + K(k)(v_1(k) - m_y) \\ P(k|k) = P(k|k-1) - K(k)P_{yy}K(k)^T \end{cases}$$

Avec K le gain du filtre de Kalman, Pxy la covariance croisée de l'état et de la mesure, Pyy la covariance prédite de la mesure, my la moyenne prédite de la sortie, v1(k) la vitesse longitudinale du vent mesurée à l'instant k au point de mesure 1.

Selon un mode de réalisation de l'invention, le filtre de Kalman sans parfum peut être mis en œuvre au moyen des différentes étapes décrites ci-dessous.

On note :

$$x(k|k-1)$$

est l'estimation de x(k) à partir des mesures du temps k-1.

$$x(k|k)$$

est l'estimation de x(k) à partir des mesures du temps k.

$$P(k|k-1)$$

est la variance d'erreur à partir des mesures du temps k-1.

$$P(k|k)$$

est la variance d'erreur à partir des mesures du temps k.

Q est la variance du bruit du système $\eta(k)$.

Puisque l'équation est linéaire, l'étape de prédiction peut s'écrire :

$$x(k|k-1) \quad = x(k-1|k-1)$$

$$P(k|k-1) \quad = P(k-1|k-1) + Q$$

Les choses se compliquent pour l'étape de correction en raison de la présence de bruits à la fois additifs et multiplicatifs. Pour surmonter cette difficulté, on peut considérer la variable aléatoire augmentée suivante :

$$x_a(k) = \begin{bmatrix} x(k) \\ \epsilon_2(k) \end{bmatrix}$$

Après l'étape de prédiction, la distribution de la variable aléatoire augmentée $x_a(k)$ peut être donnée comme une distribution normale notée N :

$$x_a(k|k-1) \sim N(m_{xa}, P_{xa})$$

Avec

$$m_{xa} = \begin{bmatrix} x(k|k-1) \\ 0 \end{bmatrix}, \; P_{xa} = \begin{bmatrix} P(k|k-1) & 0 \\ 0 & R_2(k) \end{bmatrix}$$

Avec R2(k) étant la variance du bruit $\varepsilon2(k)$ de la vitesse v2 à l'instant k.

Les points sigma notés $X_0$, $X_i$, $X_{i+n}$ associés à la moyenne $m_{xa}$ et à la matrice de covariance $P_{xa}$ peuvent être calculés de la manière suivante :

$$\begin{cases} \chi_0 &= m_{xa} \\ \chi_i &= m_{xa} + \sqrt{n+\lambda}S_i, \; i = \overline{1,n} \\ \chi_{i+n} &= m_{xa} - \sqrt{n+\lambda}S_i, \; i = \overline{1,n} \end{cases}$$

Où n=2, et S est une racine carrée de $P_{xa}$, et

$$\lambda = \mu^2(n+\kappa) - n$$

Avec $\mu$ un paramètre scalaire déterminant la dispersion des points sigma, et $\kappa$ un paramètre de redimensionnement secondaire.

On peut définir alors $X_{i,x}$ et $X_{i,\varepsilon}$ en tant que les premier et deuxième composantes de $X_i$. Les points sigma se propagent dans le modèle de mesure sous la forme suivante, pour tout i compris entre 1 et 2n.

$$y_i(k) = (v_2(k) + \chi_{i,\epsilon})\left(\frac{z_1}{z_2}\right)^{\chi_{i,x}}$$

La prochaine étape consiste à calculer la moyenne prédite $m_y$, la covariance prédite de la mesure $P_{yy}$ et la covariance croisée de l'état et la mesure $P_{xy}$.

$$\begin{cases} m_y = \sum_{i=0}^{2n} W_i^m y_i(k), \\ P_{yy} = \sum_{i=0}^{2n} W_i^c(y_i - m_y)(y_i - m_y)^T + R_1(k) \\ P_{xy} = \sum_{i=0}^{2n} W_i^c(\chi_{i,x} - x(k|k-1))(y_i - m_y)^T \end{cases}$$

Avec R1(k) étant la variance du bruit $\varepsilon1(k)$ de la vitesse v1 à l'instant k, $W_i^m$, $W_i^c$ sont des poids définis par :

$$W_0^m = \frac{\lambda}{(\lambda+n)}$$

$$W_i^m = \frac{1}{2(\lambda+n)}$$

$$W_0^c = \frac{1}{(\lambda + n)} + 1 - \mu^2 + \xi$$

$$W_i^c = \frac{1}{2(\lambda + n)}$$

Avec $\xi$ un paramètre utilisé pour incorporer toute connaissance préalable de la distribution de la variable aléatoire augmentée $x_a$.

Le gain du filtre de Kalman, l'estimation de l'état et la matrice de covariance au temps k peuvent alors être exprimés en

$$\begin{cases} K(k) = P_{xy}P_{yy}^{-1} \\ x(k|k) = x(k|k-1) + K(k)(v_1(k) - m_y) \\ P(k|k) = P(k|k-1) - K(k)P_{yy}K(k)^T \end{cases}$$

Etant donné que x(k)=a, ces équations permettent de déterminer l'exposant $\alpha$ de la loi de puissance, cet exposant étant variable dans le temps.

4) Détermination du profil vertical de la vitesse du vent

Lors de cette étape, on détermine le profil vertical de la vitesse du vent en amont de l'éolienne, en mettant en œuvre le modèle de profil vertical de la vitesse du vent construit à l'étape 2) avec l'exposant $\alpha$ déterminé à l'étape 3). Ainsi, le procédé selon l'invention permet de déterminer la vitesse du vent en tout point de l'espace en amont de l'éolienne.

De préférence, le procédé selon l'invention peut permettre de déterminer la vitesse longitudinale du vent en tout point de l'espace en amont de l'éolienne.

Selon un mode de réalisation de l'invention, on peut considérer dans la loi de puissance, la référence z0 comme l'altitude d'un quelconque point de mesure du capteur LIDAR (pouvant être différent des points de mesure utilisé lors de l'étape 1)), et la vitesse vz0 la vitesse du vent mesurée au point de mesure considéré. Ainsi, on peut déterminer dans le plan de mesure, le profil vertical de la vitesse du vent par application de la loi de puissance.

Alternativement, on peut considérer dans la loi de puissance, une référence z0 quelconque (par exemple un point dans le plan du rotor) et la vitesse vz0 la vitesse du vent estimée (reconstruite) au point considéré. Ainsi, on peut déterminer la vitesse du vent dans n'importe quel plan de l'espace, y compris dans le plan du rotor. Pour reconstruire la vitesse du vent, on peut appliquer tout procédé de reconstruction du vent, notamment celui décrit dans la demande de brevet FR 3068139 (WO2018/234409), dont on rappelle les principales étapes :

- Maillage de l'espace situé en amont dudit capteur LIDAR, le maillage comprend des points d'estimation et des points de mesure ;
- Mesure de l'amplitude et de la direction du vent aux différents points de mesure ;
- Estimation de l'amplitude et de la direction du vent à un instant quelconque pour l'ensemble des points d'estimation par une méthode des moindres carrés récursifs d'une fonction de coût (appelée également fonction objectif) ; et
- Reconstruction du champ de vent incident en trois dimensions et en temps réel sur l'ensemble des points discrétisés.

La présente invention concerne également un procédé de contrôle d'une éolienne équipée d'un capteur LIDAR. Pour ce procédé, on met en œuvre les étapes suivantes :

- on détermine le profil vertical de la vitesse du vent en amont de l'éolienne au moyen du procédé de détermination du profil vertical de la vitesse du vent selon l'une quelconque des variantes décrites ci-dessus ; et

- on contrôle l'éolienne en fonction du profil vertical de la vitesse du vent en amont de l'éolienne.

La prédiction précise et en temps réel du profil vertical de la vitesse du vent en amont de l'éolienne permet un contrôle adapté de l'éolienne, en termes de minimisation des effets sur la structure de l'éolienne et de maximisation de la puissance récupérée. En effet, au moyen de ce contrôle, le LIDAR permet d' d'anticiper la vitesse du vent qui va arriver sur l'éolienne par ces prédictions et ainsi d'adapter les équipements de l'éolienne en avance de phase pour qu'au moment où la vent estimé arrive, l'éolienne soit dans la configuration optimale pour ce vent. D'autre part, le LIDAR permet de réduire les charges sur la structure, dont les pales et le mât représentent 54% du coût. Par conséquent, l'utilisation d'un capteur LIDAR permet d'optimiser la structure de l'éolienne, et donc de diminuer les coûts et la maintenance.

Conformément à une mise en œuvre de l'invention, on peut commander l'angle d'inclinaison des pales et/ou le couple électrique de récupération du générateur de l'éolienne en fonction de la vitesse du vent. De préférence, on peut commander l'angle d'inclinaison individuel des pales. D'autres types de dispositif de régulation peuvent être utilisés. Le contrôle d'inclinaison des pales permet d'optimiser la récupération d'énergie en fonction du vent incident sur les pales.

Selon un mode de réalisation de l'invention, l'angle d'inclinaison des pales et/ou le couple électrique de récupération peuvent être déterminés au moyen de cartographies de l'éolienne en fonction de la vitesse du vent au niveau du rotor. Par exemple, on peut appliquer le procédé de contrôle décrit dans la demande de brevet FR 2976630 A1 (US 2012-0321463).

La figure 3 illustre, schématiquement et de manière non limitative, les étapes du procédé de contrôle d'une éolienne selon un mode de réalisation de l'invention. La première étape est une étape de mesure (MES) de la vitesse du vent v1, v2 en au moins un plan de mesure à deux altitudes différentes au moyen du capteur LIDAR. On construit un modèle de profil vertical de la vitesse du vent (MOD). L'étape suivante consiste à déterminer l'exposant $\alpha$ du modèle de profil vertical de la vitesse du vent (MOD) au moyen d'un filtre de Kalman sans parfum (UKF) et des mesures de la vitesse du vent v1, v2. L'exposant $\alpha$ détermine est utilisé avec le modèle du profil vertical de la vitesse du vent (MOD) pour déterminer (PRO) le profil vertical de la vitesse du vent v(z). Le profil vertical de la vitesse du vent v(z) est alors utilisé pour réaliser le contrôle (CON) de l'éolienne.

De plus, l'invention concerne un produit programme d'ordinateur, qui comprend des instructions de code agencés pour mettre en œuvre les étapes d'un des procédés précédemment décrits (procédé de détermination de détermination du profil vertical de la vitesse du vent, procédé de contrôle). Le programme est exécuté sur une unité de traitement du capteur LIDAR, ou sur tout moyen analogue, lié au capteur LIDAR ou à l'éolienne.

Selon un aspect, la présente invention concerne également un capteur LIDAR pour éolienne, qui comprend une unité de traitement configurée pour mettre en œuvre un des procédés précédemment décrits (procédé de détermination de détermination du profil vertical de la vitesse du vent, procédé de contrôle).

Conformément à une mise en œuvre de l'invention, le capteur LIDAR peut être un capteur LIDAR scanné, LIDAR continu ou LIDAR pulsé. De préférence, le capteur LIDAR est un capteur LIDAR pulsé.

L'invention concerne également une éolienne, notamment une éolienne offshore (en mer) ou onshore (sur terre) équipée d'un capteur LIDAR tel que décrit ci-dessus. Selon un mode de réalisation de l'invention, le capteur LIDAR peut être disposé sur la nacelle de l'éolienne ou dans le nez de l'éolienne. Le capteur LIDAR est dirigé de telle sorte à réaliser une mesure du vent en amont de l'éolienne (c'est-à-dire avant l'éolienne et selon son axe longitudinal, désigné par l'axe x sur la figure 1). Selon un mode de réalisation, l'éolienne peut être conforme à l'éolienne illustrée en figure 1.

Pour le mode de réalisation du procédé de contrôle, l'éolienne peut comprendre des moyens de contrôle, par exemple le contrôle de l'angle d'inclinaison (pouvant être traduit par angle de tangage) d'au moins une pale de l'éolienne ou le contrôle du couple électrique, pour mettre en œuvre de contrôle le procédé selon l'invention.

## Exemples

Les caractéristiques et avantages du procédé selon l'invention apparaîtront plus clairement à la lecture de l'exemple d'application ci-après.

Pour cet exemple, on compare la vitesse du vent estimée en un point en amont de l'éolienne à partir du profil vertical de la vitesse du vent déterminé par le procédé selon un mode de réalisation de l'invention. Pour cela, pour une distance de 200m en amont de l'éolienne, on mesure les vitesses de vent en deux points de mesure d'altitudes différentes pour estimer, en temps réel, l'exposant $\alpha$ de la loi de puissance, au moyen du procédé selon un mode de réalisation de l'invention. Puis, pour une distance de 100m en amont de l'éolienne, on applique le profil vertical de la vitesse du vent déterminé avec l'exposant $\alpha$ pour déterminer la vitesse du vent longitudinale à une altitude prédéterminée au moyen d'une mesure de la vitesse du vent longitudinale à une altitude connue.

Pour cet exemple, on considère un LIDAR pulsé 4 faisceaux réalisant des mesures à des plans de mesure situés à 100 et 200 m de l'éolienne.

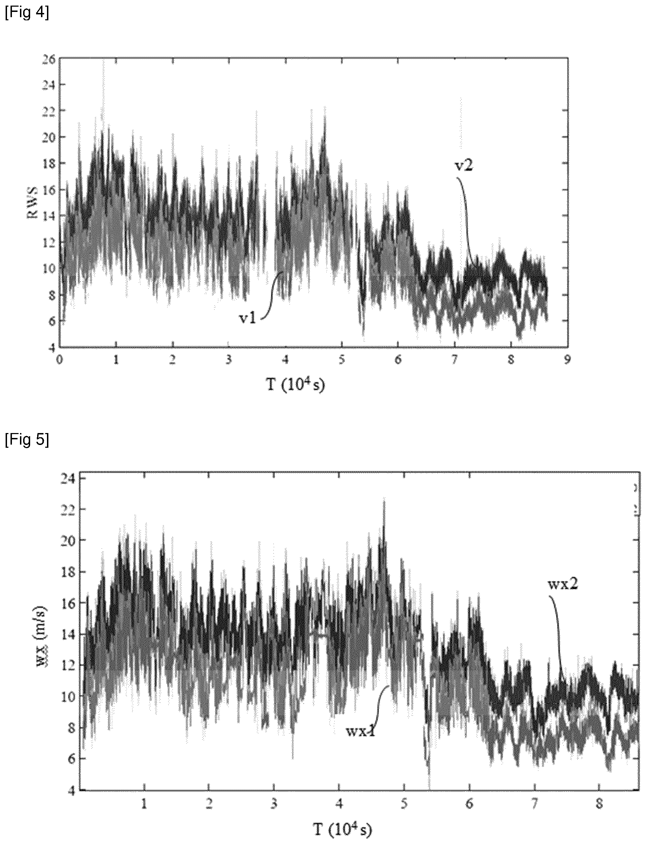

La figure 4 représente la vitesse radiale du vent RWS en m/s (c'est-à-dire selon la direction du faisceau de mesure) mesurée pour deux points de mesure (pouvant correspondre aux points de mesure PT1 et PT3 de la figure 1) en fonction du temps T en $10^4$s pour une journée de mesure. Cette vitesse radiale du vent est mesurée dans un plan de mesure à 200m en amont de l'éolienne. La vitesse mesurée v1 en gris clair correspond à la vitesse mesurée à la vitesse du point de mesure le plus bas. La vitesse mesurée v2 en gris foncé correspond à la vitesse mesurée à la vitesse du point de mesure le plus haut. De manière attendue, la vitesse mesurée au point de mesure le plus haut est supérieure à la vitesse mesurée au point de mesure le plus bas. Sur cette figure, on peut constater que le capteur LIDAR ne fournit pas de mesures à tout moment, en raison d'un effet de blocage de pale.

La figure 5 est une courbe de la vitesse longitudinale du vent wx en m/s (c'est-à-dire selon la direction x de la figure 1) en fonction du temps T en $10^4$s, correspondant à une journée de mesure. La vitesse longitudinale du vent wx est estimée à partir de la vitesse radiale du vent RWS de la figure 4. Cette vitesse longitudinale est estimée dans un plan de mesure à 200m en amont de l'éolienne. La vitesse longitudinale wx1 en gris clair correspond à la vitesse longitudinale estimée au point de mesure le plus bas. La vitesse longitudinale wx2 en gris foncé correspond à la vitesse longitudinale estimée au point de mesure le plus haut.

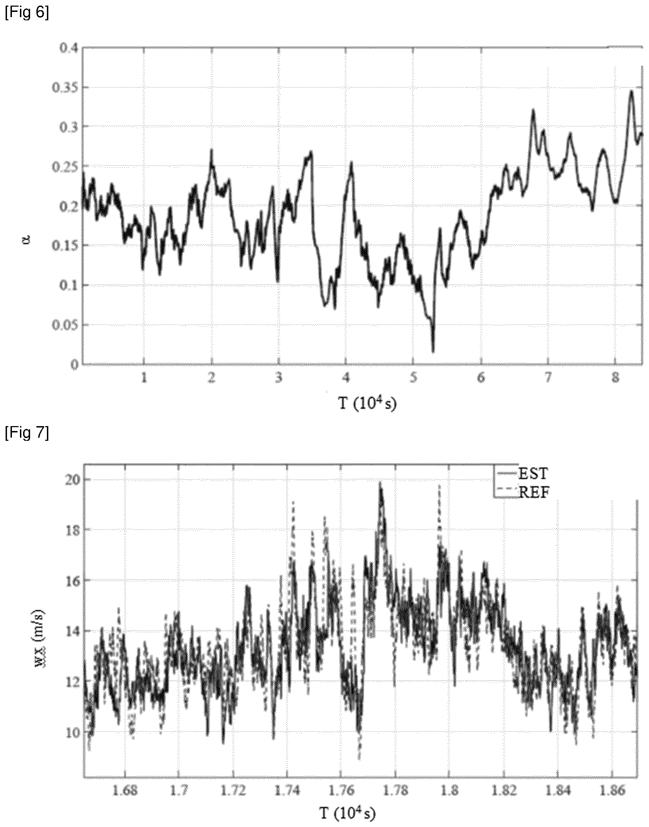

A partir de ces vitesses, on détermine au moyen du procédé selon l'invention, l'exposant $\alpha$ de la loi de puissance. La figure 6 est une courbe de l'exposant $\alpha$ de la loi de puissance en fonction du temps T en $10^4$s. On peut constater que l'exposant $\alpha$ varie de manière importante, par conséquent l'hypothèse de l'art antérieur qui considère un exposant $\alpha$ contant n'est pas réaliste et ne permet pas de déterminer précisément le profil vertical de la vitesse du vent.

Le capteur LIDAR réalise également une mesure de la vitesse du vent au plan de mesure situé à 100 m en amont de l'éolienne à deux altitudes connues. Afin de montrer le caractère précis du procédé selon l'invention, d'une part on considère la mesure de la vitesse du vent au point le plus haut à 100m comme une référence, et d'autre part, on estime la vitesse du vent au point de mesure le plus haut à 100m au moyen du procédé selon l'invention à partir de la vitesse du vent au point de mesure le plus bas à 100m et de l'exposant $\alpha$ déterminé en figure 6 avec les mesures de la vitesse du vent à 200m. La figure 7 est une courbe de la vitesse longitudinale du vent wx en m/s (c'est-à-dire selon la direction x de la figure 1) au point de mesure le plus haut en fonction du temps T en $10^4$s. Cette vitesse longitudinale est estimée dans un plan de mesure à 100m en amont de l'éolienne. La courbe REF correspond à la référence définie ci-dessus, et la courbe EST correspond à l'estimation au moyen du procédé selon l'invention tel que définie ci-dessus. On remarque que les courbes sont très proches, ce qui montre que le procédé selon l'invention permet une détermination précise de la vitesse du vent.

## Revendications

1. Procédé de détermination du profil vertical de la vitesse du vent en amont d'une éolienne (1), ledit profil vertical de la vitesse du vent étant le gradient de la vitesse du vent en fonction de l'altitude, ladite éolienne (1) étant équipée d'un capteur LIDAR (2) dirigé en amont de ladite éolienne (1), dans lequel on met en œuvre les étapes suivantes :

   a) On mesure (MES) la vitesse du vent en au moins un plan de mesure (PM) en amont de ladite éolienne en au moins deux points de mesure (PT1, PT2, PT3, PT4) situés à des altitudes différents au moyen dudit capteur LIDAR (2) ;
   b) On construit un modèle de profil vertical de la vitesse de vent (MOD) au moyen d'une

$$\frac{v_z}{v_{z_0}} = \left(\frac{z}{z_0}\right)^{\alpha}$$

   loi de puissance de la forme avec $v_z$ la vitesse longitudinale du vent à l'altitude z, $z_0$ altitude de référence, $v_{z0}$ la vitesse longitudinale du vent à l'altitude de référence $z_0$ et $\alpha$ l'exposant de ladite loi de puissance, la direction longitudinale correspondant à l'axe du rotor de ladite éolienne (1) ; procédé étant **caractérisé en ce qu'**
   c) On détermine ledit exposant $\alpha$ de ladite loi de puissance au moyen d'un filtre de Kalman sans parfum au moyen desdites mesures de la vitesse de vent auxdits deux points de mesure (PT1, PT2, PT3, PT4) ; et
   d) On détermine ledit profil vertical de la vitesse du vent (PRO) en appliquant ledit exposant $\alpha$ déterminé audit modèle de profil vertical de la vitesse de vent.

2. Procédé de détermination du profil vertical de la vitesse du vent selon la revendication 1 dans lequel on applique ledit filtre de Kalman sans parfum à un modèle d'état qui comporte du bruit additif et du bruit multiplicatif.

3. Procédé de détermination du profil vertical de la vitesse du vent selon la revendication 2, dans lequel ledit modèle d'état s'écrit :

$$\begin{cases} x(k) &= x(k-1) + \eta(k-1), \\ y(k) &= (v_2(k) + \epsilon_2(k)) \left(\frac{z_1}{z_2}\right)^{x(k)} - \epsilon_1(k) \end{cases}$$

Avec x(k)=a(k) la variable d'état à l'instant k, y(k)=v1(k) la sortie dudit modèle d'état correspondant à la vitesse longitudinale du vent mesurée à l'instant k au point de mesure 1, $\eta$(k-1) est la variation de l'exposant $\alpha$ à l'instant k-1, v2(k) la vitesse longitudinale du vent mesurée à l'instant k au point de mesure 2, z1 l'altitude du point de mesure 1, z2 l'altitude du point de mesure 2, $\epsilon$1(k) le bruit de la vitesse v1 à l'instant k, et $\epsilon$2(k) le bruit de la vitesse v2 à l'instant k.

4. Procédé de détermination du profil vertical de la vitesse du vent selon l'une des revendications 2 ou 3, dans lequel pour l'application dudit filtre de Kalman, on considère la variable aléatoire augmentée $x_a$

$$x_a(k) = \begin{bmatrix} x(k) \\ \epsilon_2(k) \end{bmatrix}$$

Avec x(k)=a(k) la variable d'état à l'instant k et $\epsilon$2(k) le bruit de la vitesse v2 à l'instant k.

5. Procédé de détermination du profil vertical de la vitesse du vent selon l'une des revendications précédentes, dans lequel on détermine ledit exposant $\alpha$ de ladite loi de puissance au moyen des étapes suivantes :

i) on initialise k=0, le vecteur d'état $\hat{x}_a$(0|0) = m(0) et l'état de la matrice de covariance, $P$(0|0) = $P_0$ ;
ii) à chaque instant k, on acquiert lesdites mesures v1(k) et v2(k) de la vitesse de vent aux points de mesures 1 et 2, avec y(k)=v1(k) ; et
iii) à chaque instant k, on détermine ledit exposant $\alpha$ de ladite loi de puissance au moyen des équations suivantes :

$$\begin{cases} K(k) = P_{xy} P_{yy}^{-1} \\ x(k|k) = x(k|k-1) + K(k)(v_1(k) - m_y) \\ P(k|k) = P(k|k-1) - K(k) P_{yy} K(k)^T \end{cases}$$

Avec K le gain du filtre de Kalman, Pxy la covariance croisée de l'état et de la mesure, Pyy la covariance prédite de la mesure, my la moyenne prédite de la sortie, v1(k) la vitesse longitudinale du vent mesurée à l'instant k au point de mesure 1, $P(k|k$ - 1) est la variance d'erreur à partir des mesures du temps k-1, $P(k|k)$ est la variance d'erreur à partir des mesures du temps k.

6. Procédé de contrôle d'une éolienne (1) équipée d'un capteur LIDAR (2), **caractérisé en ce qu'**on met en œuvre les étapes suivantes :

a) on détermine ledit profil vertical de la vitesse du vent en amont de l'éolienne (1) au moyen du procédé selon l'une des revendications précédentes ;
b) on contrôle ladite éolienne (1) en fonction dudit profil vertical de la vitesse du vent en amont de ladite éolienne (1).

7. Produit programme d'ordinateur **caractérisé en ce qu'**il comprend des instructions de code agencés pour mettre en œuvre les étapes d'un procédé selon l'une des revendications précédentes, lorsque le programme est exécuté sur une unité de traitement dudit capteur LIDAR (2).

8. Capteur LIDAR (2) pour éolienne **caractérisé en ce qu'**il comprend une unité de traitement mettant en œuvre un procédé selon l'une des revendications 1 à 6.

9. Eolienne (1) **caractérisée en ce qu'**elle comporte un capteur LIDAR (2) selon la revendication 8, ledit capteur LIDAR (2) étant de préférence placé sur la nacelle de ladite éolienne (1) ou dans le nez de l'éolienne.

## Patentansprüche

1. Verfahren zur Bestimmung des Vertikalprofils der Windgeschwindigkeit stromaufwärts vor einer Windkraftanlage (1), wobei das Vertikalprofil der Windgeschwindigkeit der Gradient der Windgeschwindigkeit abhängig von der Höhe ist, wobei die Windkraftanlage (1) mit einem LIDAR-Sensor (2) ausgestattet ist, der stromaufwärts vor die Windkraftanlage (1) ausgerichtet ist, wobei die folgenden Schritte durchgeführt werden:

   a) die Windgeschwindigkeit wird in mindestens einer Messebene (PM) stromaufwärts vor der Windkraftanlage an mindestens zwei auf verschiedenen Höhen befindlichen Messpunkten (PT1, PT2, PT3, PT4) mittels des LIDAR-Sensors (2) gemessen (MES);
   b) ein Vertikalprofilmodell der Windgeschwindigkeit (MOD) wird mittels eines Leistungsgesetzes folgender Form konstruiert

$$\frac{v_z}{v_{z_0}} = \left(\frac{z}{z_0}\right)^a$$

   mit $v_z$ der Längsgeschwindigkeit des Winds auf der Höhe z, $z_0$ der Bezugshöhe, $v_{z_0}$ der Längsgeschwindigkeit des Winds auf der Bezugshöhe $z_0$ und $\alpha$ dem Exponenten des Leistungsgesetzes, wobei die Längsrichtung der Achse des Rotors der Windkraftanlage (1) entspricht;
   wobei das Verfahren **dadurch gekennzeichnet ist, dass**
   c) der Exponent $\alpha$ des Leistungsgesetzes mittels eines Unscented Kalman-Filters mittels der Messungen der Windgeschwindigkeit an den zwei Messpunkten (PT1, PT2, PT3, PT4) bestimmt wird; und
   d) das Vertikalprofil der Windgeschwindigkeit (PRO) durch Anwenden des bestimmten Exponenten $\alpha$ an das Vertikalprofilmodell der Windgeschwindigkeit bestimmt wird.

2. Verfahren zur Bestimmung des Vertikalprofils der Windgeschwindigkeit nach Anspruch 1, wobei das Unscented Kalman-Filter auf ein Zustandsmodell angewendet wird, das additives Rauschen und multiplikatives Rauschen aufweist.

3. Verfahren zur Bestimmung des Vertikalprofils der Windgeschwindigkeit nach Anspruch 2, wobei das Zustandsmodell folgendermaßen geschrieben wird:

$$\begin{cases} \chi(k) = \chi(k-1) + \eta(k-1), \\ y(k) = \left(v_2(k) + \epsilon_2(k)\right)\left(\frac{z_1}{z_2}\right)^{\chi(k)} - \epsilon_1(k) \end{cases}$$

   mit $x(k)=\alpha(k)$ der Zustandsvariablen zum Zeitpunkt k, $y(k)=v1(k)$ dem Ausgang des Zustandsmodells entsprechend der Längsgeschwindigkeit des Winds gemessen zum Zeitpunkt k am Messpunkt 1, $\eta(k-1)$ ist die Variation des Exponenten $\alpha$ zum Zeitpunkt k-1, $v2(k)$ die Längsgeschwindigkeit des Winds gemessen zum Zeitpunkt k am Messpunkt 2, z1 die Höhe des Messpunkts 1, z2 die Höhe des Messpunkts 2, $\epsilon1(k)$ das Rauschen der Geschwindigkeit v1 zum Zeitpunkt k und $\epsilon2(k)$ das Rauschen der Geschwindigkeit v2 zum Zeitpunkt k.

4. Verfahren zur Bestimmung des Vertikalprofils der Windgeschwindigkeit nach einem der Ansprüche 2 oder 3, wobei für die Anwendung des Kalman-Filters die Zufallsvariable erhöht um $x_a$ angenommen wird,

$$\chi_a(k) = \begin{bmatrix} \chi(k) \\ \epsilon_2(k) \end{bmatrix}$$

mit x(k)=a(k) der Zustandsvariablen zum Zeitpunkt k und ε2(k) dem Rauschen der Geschwindigkeit v2 zum Zeitpunkt k.

5. Verfahren zur Bestimmung des Vertikalprofils der Windgeschwindigkeit nach einem der vorhergehenden Ansprüche, wobei der Exponent α des Leistungsgesetzes mittels der folgenden Schritte bestimmt wird:

i) k=0, der Zustandsvektor $\hat{x}_a(0|0)$ = m(0) und der Zustand der Kovarianzmatrix P(0|0) = $P_0$ werden initialisiert;
ii) zu jedem Zeitpunkt k werden die Messwerte v1(k) und v2(k) der Windgeschwindigkeit an den Messpunkten 1 und 2 erfasst, mit y(k)=v1(k); und
iii) zu jedem Zeitpunkt k wird der Exponent α des Leistungsgesetzes mittels der folgenden Gleichungen bestimmt:

$$\begin{cases} K(k) = P_{xy}P_{yy}^{-1} \\ \chi(k|k) = \chi(k|k-1) + K(k)\big(v_1(k) - m_y\big) \\ P(k|k) = P(k|k-1) - K(k)P_{yy}K(k)^T \end{cases}$$

mit K der Verstärkung des Kalman-Filters, Pxy der gekreuzten Kovarianz des Zustands und der Messung, Pyy der vorhergesagten Kovarianz der Messung, my dem vorhergesagten Mittelwert des Ausgangs, v1(k) der Längsgeschwindigkeit des Winds gemessen zum Zeitpunkt k am Messpunkt 1, P(k|k - 1) ist die Fehlervarianz ausgehend von den Messungen der Zeit k-1, P(k|k) ist die Fehlervarianz ausgehend von den Messungen der Zeit k.

6. Verfahren zur Kontrolle einer mit einem LIDAR-Sensor (2) ausgestatteten Windkraftanlage (1), **dadurch gekennzeichnet, dass** die folgenden Schritte durchgeführt werden:

a) das Vertikalprofil der Windgeschwindigkeit stromaufwärts vor der Windkraftanlage (1) wird mittels des Verfahrens nach einem der vorhergehenden Ansprüche bestimmt;
b) die Windkraftanlage (1) wird abhängig vom Vertikalprofil der Windgeschwindigkeit stromaufwärts vor der Windkraftanlage (1) kontrolliert.

7. Computerprogrammprodukt, **dadurch gekennzeichnet, dass** es Codeanweisungen enthält, die eingerichtet sind, um die Schritte eines Verfahrens nach einem der vorhergehenden Ansprüche durchzuführen, wenn das Programm auf einer Verarbeitungseinheit des LIDAR-Sensors (2) ausgeführt wird.

8. LIDAR-Sensor (2) für einer Windkraftanlage, **dadurch gekennzeichnet, dass** er eine Verarbeitungseinheit enthält, die ein Verfahren nach einem der Ansprüche 1 bis 6 durchführt.

9. Windkraftanlage (1), **dadurch gekennzeichnet, dass** sie einen LIDAR-Sensor (2) nach Anspruch 8 aufweist, wobei der LIDAR-Sensor (2) vorzugsweise auf der Gondel der Windkraftanlage (1) oder in der Nase der Windkraftanlage angeordnet ist.

**Claims**

1. Method for determining the vertical profile of the speed of the wind upstream of a wind turbine (1), said vertical profile of the speed of the wind being the gradient of the speed of the wind as a function of altitude, said wind turbine (1) being equipped with a lidar sensor (2) directed upstream of said wind turbine (1), wherein the following steps are implemented:

a) the speed of the wind in at least one measurement plane (PM) upstream of said wind turbine is measured (MES) at at least two measurement points (PT1, PT2, PT3, PT4) located at different altitudes by means of said lidar sensor (2);
b) a model (MOD) of the vertical profile of the wind speed is constructed by means of a power law of the form:

$$\frac{v_z}{v_{z0}} = \left(\frac{z}{z_0}\right)^{\alpha}$$

with $v_z$ the longitudinal speed of the wind at the altitude z, $z_0$ a reference altitude, $v_{z0}$ the longitudinal speed of the wind at the reference altitude $z_0$ and $\alpha$ the exponent of said power law, the longitudinal direction corresponding to the axis of the rotor of said wind turbine (1);

the method being **characterized in that**:

c) said exponent $\alpha$ of said power law is determined by means of an unscented Kalman filter by means of said measurements of the wind speed at said two measurement points (PT1, PT2, PT3, PT4); and

d) said vertical profile (PRO) of the speed of the wind is determined by applying said determined exponent $\alpha$ to said model of the vertical profile of the wind speed.

2. Method for determining the vertical profile of the speed of the wind according to Claim 1, wherein said unscented Kalman filter is applied to a state model that comprises additive noise and multiplicative noise.

3. Method for determining the vertical profile of the speed of the wind according to Claim 2, wherein said state model is written:

$$\begin{cases} x(k) = x(k-1) + \eta(k-1) \\ y(k) = \left(v_2(k) + \epsilon_2(k)\right)\left(\dfrac{z_1}{z_2}\right)^{x(k)} - \epsilon_1(k) \end{cases}$$

with $x(k) = \alpha(k)$ the state variable at the time k, $y(k) = v_1(k)$ the output of said state model corresponding to the longitudinal speed of the wind measured at the time k at measurement point 1, $\eta(k-1)$ the variation in the exponent $\alpha$ at the time k-1, $v_2(k)$ the longitudinal speed of the wind measured at the time k at measurement point 2, $z_1$ the altitude of measurement point 1, $z_2$ the altitude of measurement point 2, $\varepsilon_1(k)$ the noise in the speed $v_1$ at the time k, and $\varepsilon_2(k)$ the noise in the speed $v_2$ at the time k.

4. Method for determining the vertical profile of the speed of the wind according to either of Claims 2 and 3, wherein, to apply said Kalman filter, the following augmented random variable $x_a$ is considered:

$$x_a(k) = \begin{bmatrix} x(k) \\ \epsilon_2(k) \end{bmatrix}$$

with $x(k) = \alpha(k)$ the state variable at the time k, and $\varepsilon_2(k)$ the noise in the speed $v_2$ at the time k.

5. Method for determining the vertical profile of the speed of the wind according to one of the preceding claims, wherein said exponent $\alpha$ of said power law is determined by means of the following steps:

i) the state vector, the state of the covariance matrix and k are initialized to $\hat{x}_a(0|0) = m(0)$, $P(0|0) = P_0$, and k=0, respectively;

ii) at each time k, said measurements $v_1(k)$ and $v_2(k)$ of the wind speed are acquired at measurement points 1 and 2, with $y(k) = v_1(k)$; and

iii) at each time k, said exponent $\alpha$ of said power law is determined by means of the following equations:

$$\begin{cases} K(k) = P_{xy}P_{yy}^{-1} \\ x(k|k) = x(k|k-1) + K(k)\left(v_1(k) - m_y\right) \\ P(k|k) = P(k|k-1) + K(k)P_{yy}K(k)^T \end{cases}$$

with K the gain of the Kalman filter, $P_{xy}$ the cross-covariance of the state and of the measurement, $P_{yy}$ the predicted covariance of the measurement, $m_y$ the predicted average of the output, $v_1(k)$ the longitudinal speed of the wind measured at the time k at measurement point 1, $P(k|k-1)$ the error variance based on the measurements of the time k-1, and $P(k|k)$ the error variance based on the measurements of the time k.

6. Method for controlling a wind turbine (1) equipped with a lidar sensor (2), **characterized in that** the following steps are implemented:

a) said vertical profile of the speed of the wind upstream of the wind turbine (1) is determined by means of the method according to one of the preceding claims;
b) said wind turbine (1) is controlled depending on said vertical profile of the speed of the wind upstream of said wind turbine (1).

7. Computer program product, **characterized in that** it comprises code instructions arranged to implement the steps of a method according to one of the preceding claims, when the program is executed on a processing unit of said lidar sensor (2).

8. Wind-turbine lidar sensor (2), **characterized in that** it comprises a processing unit that implements a method according to one of Claims 1 to 6.

9. Wind turbine (1), **characterized in that** it comprises a lidar sensor (2) according to Claim 8, said lidar sensor (2) preferably being placed on the nacelle of said wind turbine (1) or in the nose cone of the wind turbine.

[Fig 1]

[Fig 2]

[Fig 3]

[Fig 4]

[Fig 5]

[Fig 6]

[Fig 7]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3013777
- US 2015145253 A
- FR 3068139
- WO 2018234409 A
- FR 2976630 A1
- US 20120321463 A

**Littérature non-brevet citée dans la description**

- **WAGNER, ROZENN ; ANTONIOU, LOANNIS ; M. PEDERSEN, SØREN ; COURTNEY, MICHAEL ; JØRGENSEN, HANS.** The Influence of the Wind Speed Profile on Wind Turbine Performance Measurements. *Wind Energy,* 2009, vol. 12, 348-362